# EUROPEAN PATENT APPLICATION

(11) **EP 4 745 252 A2**
(43) Date of publication of application: **20.05.2026**
(21) Application number: 24782622.5
(22) Date of filing: 11.07.2024
(51) Int. Cl.: C22B 1/00, C22B 1/18, C22B 1/20, C22B 3/08, C22B 15/00

(54) **HEAP LEACHING PROCESS WITH SEMI -AUTOGENOUS HEATING**

(30) Priority: 13.07.2023 CL 202302049
(71) Applicant: Corporacion Nacional del Cobre de Chile, 1270 Santiago (CL)
(72) Inventor: LAGNO, Felipe, Santiago (CL); DEL CASTILLO, Alex, Santiago (CL); SALHE, Carolina, Santiago (CL); CARREÑO, Héctor, Santiago (CL); CARRASCO, Miguel, Santiago (CL)
(74) Representative: Herrero & Asociados, S.L.
(86) International application number: PCT/IB2024/056755
(87) International publication number: WO 2025/012848

(57) **Abstract**

Heap mineral leaching process in chloride environments that uses chemical reactions and minimizes heat losses with the aim of achieving an operating temperature for the leaching of primary and secondary sulfides in ranges from 30°C to 40°C. The process includes a semi-autogenous heating of leach heaps, from an initial saline-acid curing with hot brine and a subsequent rest of the ore where the temperature increases because of the exothermic reactions, followed by a thermal activation and subsequent intermittent irrigation, ending with a chemical leaching. The combined effect of operating in temperature ranges higher than the ambient condition together with solutions concentrated in chloride ion allow to significantly improve the extraction kinetics of primary and secondary copper sulfides.

## Description

### PRIOR ART

Chloride leaching processes are used today for the hydrometallurgical treatment of sulfide ores. Leaching of oxidized copper ores consists of extracting the copper ions from the ore by piling the crushed material to a desired size and then agglomerating it to form the leaching heap. Finally, the heap is irrigated with acid solutions to obtain a solution loaded with copper (PLS), which in subsequent concentration and purification stages is subjected to solvent extraction (SX) and electrowinning (EW). However, in the case of sulfide ores, leaching is not simple to carry out since the times associated with dissolution are longer. Different phenomena have been studied that would give rise to the lethargy of copper dissolution in the sulfide state when it is leached, involving multiple variables, such as the particle size of the heap material, the way and time to carry out the agglomeration, the redox potential and the acidity, among others.

Significant levels of copper recovery have been achieved in the existing chloride leaching processes in the prior art, which fluctuate between 65 and 80%, in which copper sulfides are basically transformed into more soluble compounds.

One of the processes widely used in the mining world is the process known as "Cuprochlor"^{®} of the company Antofagasta Minerals, which is a process for leaching primary sulfides with recoveries of up to 70%. This process involves the addition in the agglomeration stage of a first solution containing calcium ion, in a proportion of 1 to 10 kilograms of calcium ion per ton of ore, in concentrations between 10 to 200 grams of calcium ion per liter of solution; b) in the agglomeration stage a second solution containing sulfate ion is added, in the proportion of 5 to 60 kilograms of sulfate ion per ton of ore, in concentrations of 150 to 1800 grams of sulfate ion per liter of solution; c) the final agglomerate has a water content between 35 to 130 kilograms of water per ton of ore; d) in the agglomeration stage a water stream is added when the combination of the first and second solution does not comply with the range of point c).

Patent application CL 201701589 describes a method for recovering one or more minerals of copper, uranium and a precious metal from an ore material, characterized in that it includes: (a) forming a heap from the mineral material; (b) during irrigation of the active heap, contacting the heap of mineral material with an acidified leaching liquid containing iron with high chloride content in the presence of an oxygen-containing gas, producing a charged leaching solution; and (c) recovering one or more elements of copper, uranium and a precious metal from the charged leach solution; wherein the solution potential of the leach liquid exceeds 450 mv Ag/AgCl; the total iron concentration of the leach liquid is greater than 0.1 g/l and the chloride ion concentration of the leach liquid is between 20 and 230 g/l.

Patent registration CL 63.104 discloses a method of leaching copper from a heap of crushed chalcopyrite or chalcopyrite ore mixed with refractory oxide minerals or secondary sulfide minerals such as chalcocite, covellite, enargite and bornite that is irrigated with a leach solution comprising at least one resting stage followed by an irrigation stage, wherein during the irrigation stage a leaching solution containing chloride ions is applied to the ore at a higher rate than during the resting stage, and during the irrigation stage the chloride ion concentration of the leaching solution is between 100 grams per liter and 190 grams per liter, and wherein the resting stage has a duration of 20 hours to 50 days in order to increase the dissolution of the ore.

The present application differs from the prior art mainly by the fact that a semi-autogenous heating of the heap is carried out, which is subjected to leaching from an initial saline-acid curing with hot brine and a subsequent rest of the mineral in which the temperature increases due to the exothermic reactions of the mineral, then follows a thermal activation stage, a subsequent stage of irrigation with intermittent irrigation and ending with a chemical leaching.

The combined effect of operating in temperature ranges above ambient conditions together with solutions concentrated in chloride ion, allows to significantly improve the extraction kinetics of primary and secondary sulfides.

In addition, the operating ranges of the process stages allow for improved copper recovery from the ore, where:
- The process applies to both copper sulfide ores and mixed or mixed oxide and sulfide ores.
- Curing salt dosing between 0 and 18 kg/t.
- Curing acid dosing between 0 and 12 kg/t
- Cured mineral moisture between 6 and 8%.
- Average operating temperature between 30° to 40° C.
- Aqueous solutions containing chloride ion are used for saline-acid curing.
- Generation of a pseudo-adiabatic system that minimizes heat losses to the environment (soil and air).

### BRIEF DESCRIPTION OF THE FIGURES

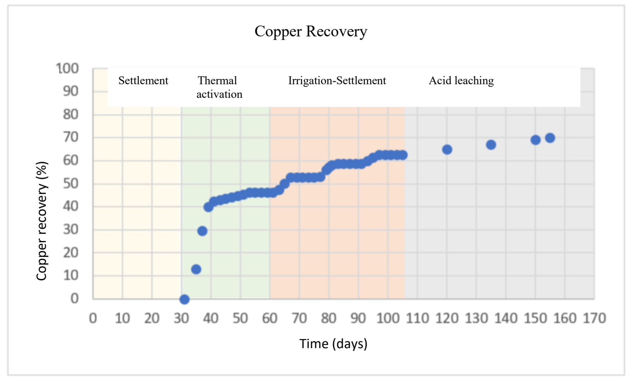

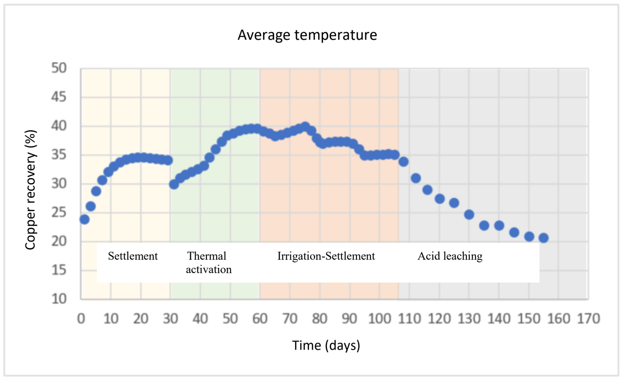

Figures 1 and 2 correspond to graphs showing copper recovery according to the process of the present invention.

### DESCRIPTION OF THE INVENTION

The invention consists of a heap leaching process of minerals in chloride environments that utilizes chemical reactions and minimizes heat losses, where a semi-autogenous heating - with low incorporation of external heat - of leaching heaps is achieved. The process includes the following stages:
Saline-acid curing of the ore: Curing is carried out with acidulated-brine, which allows for an initial increase in ore temperature. The acidulated brine is heated to temperatures within the range of 30°C to 60°C autogenously by the addition of concentrated acid over the brine in a stirred tank or mixing reactor.

Rest of the stacked ore: The stacked ore is kept at rest, considering a stack with aeration and covered with a plastic cover ("thermofilm"), to promote exothermic reactions and with the resulting increase of the ore temperature to values between 25° to 60° C at the end of the resting period. The final temperature reached will strongly depend on the copper grade of the ore to be processed. The ore in the heap is covered with thermofilm - on its surface and sides, or a layer of bischofite or both and/or similar elements to reduce heat losses by radiation and evaporation.

Thermal Activation: Once the settlement period is over, the irrigation with leaching solutions with temperatures between 40°C and 60 °C is initiated. This leaching cycle is characterized by irrigation cycles whose objective is to increase temperature to maintain chemical reactions above the Activation Energy threshold. This irrigation is done continuously for a period of 15 to 30 days, with irrigation rates between 6 to 12 L/h-m² , preferably 20 days or up to a leaching ratio (volume of solution [m³] irrigating a unit mass of ore [ton]) between 0.25 to 0.35 m³ /ton (thermal activation stage). At this stage the ore must be covered by thermofilms or similar covers to minimize heat losses.

Rest followed by irrigation at low leaching rate: Once the target heap temperature is reached within the heap, a new stage of settlement followed by irrigation is initiated, where the settling strategies can be 10, 15, 20 to 25 days of settlement, each alternated by irrigation stages of 2 to 5 days. The irrigation stages allow to "collect" the copper that is dissolved in the settlement stages, the alternated irrigation is done with solutions at low temperature (between 15 to 25 C) to avoid cooling in the pile.

Chemical Leaching: It has been observed that in the settlement-irrigation stage, given the high settlement periods, the solutions can be deficient in sulfuric acid, thus generating re-precipitation of Cu (eventually as copper hydroxides, copper oxysulfates and/or copper oxychlorides). The objective of this stage is to dissolve these re-precipitated copper compounds; this is done by means of an acid leaching stage whose objective is to dissolve soluble compounds in acidic environments.

The salt-acid curing stage of the ore involves incorporating an acidulated brine at a temperature between 30 and 60 °C, applied either directly onto the ore on a conveyor belt or using agglomerating drums to mix the ore and the hot brine. The brine is prepared by mixing salt (NaCl, KCl, MgCl₂ or any salt with high concentrations of chloride ion), sulfuric acid and process leaching solutions (PLS, ILS, Raffinate). Mixing is carried out in agitated dissolution ponds, where all feed streams are incorporated at ambient temperature. The mixing heat of these elements allows a brine temperature between 40°C and 60°C to be reached. To avoid heat losses in the preparation of acid brine, preparation tanks and pipes with thermal insulation are considered.

The mixing ratio of each of the reagents (salt, acid and process solutions) is such that chloride ion concentrations varying between 250 to 350 g/L and sulfuric acid concentrations varying between 150 and 250 g/L are achieved.

The acidified brine is mixed with the ore to be leached to reach a humidity that varies between 6% and 8%. This mineral-brine mixture can be carried out on conveyor belts or in agglomerating drums.

The final mixture reaches temperatures between 25°C to 30°C, which is achieved without the addition of external heat.

The settlement stage comprises that, immediately after stacking the ore, the irrigation system is installed and the pile is covered with thermofilm or similar cover, in order to preserve the temperature of the ore. The ore is covered with thermofilm or a layer of bischofite or both or similar elements to reduce heat losses by radiation and evaporation, and to favor the incorporation of solar radiation. Aeration with atmospheric air or oxygen-enriched air at temperatures between 40 and 70 °C is considered during the entire settlement period. The temperature of this air is increased in order to reduce heat losses by conduction between the pile and the ground and to generate a sort of pseudo-adiabatic barrier at the base of the ore. This stage involves the air being enriched to values up to a ratio of O₂:N₂ = 90:10. The amount of enrichment is selected depending on the grade of the feed ore and to favor the oxidation reactions of the primary and secondary sulfide minerals.

Under the described conditions, during the ore settlement stage, the chemical reactions of sulfide minerals occur, which generate temperature increases to values between 25° and 40 °C; the temperature at the end of the process will depend on the copper grade and characteristics of the ore to be treated. The settlement time varies between 20 to 60 days. In this stage, there is NO addition of external heat.

The thermal activation stage comprises that, once the settlement stage is finished, irrigation with leaching solutions at a temperature between 35°C to 50°C is started. This irrigation is done continuously for a period of 15 to 30 days, preferably 20 days or until a leaching ratio between 0.25 to 0.35 m³ /ton is reached. At this stage the ore should be covered by thermofilms or similar covers.

Continuous irrigation, which is carried out with ILS solution which is an intermediate leaching solution that collects the solution produced by the partial leaching of copper from the ore in the leaching heaps during the leaching cycle, ends when the average temperature of the heap reaches values above 40°C, but below 50°C. Ore leaching may consider an initial wetting ramp prior to continuous irrigation. It also considers a strategy to minimize heat loss through the base of the heap, by heating the air injected at the base. The irrigation solution should contain a concentration of between 10 to 25 g/L of sulfuric acid and a concentration of chloride ion between 50 to 90 g/L. The main chemical reactions, in a simplified manner, that would take place in the heap for chalcopyrite, catalyzed by the combined effect of temperature and chloride concentrations, would be the following (for other sulfide species they are analogous):

CuFeS₂ + 4Fe(III) → Cu(II) + 5 Fe(II) + 2 S

CuFeS₂ + 4Cu(II) → Cu(I) + 5 Fe(II) + 2 S

The incorporation of air at temperature is considered with the objective of maintaining the semi-adiabatic system and incorporating oxygen to ensure the oxidation reactions of the ferrous and cuprous ions to favor the extension of the previous reactions.

2Fe(II) + ½ O₂ + 2H⁺ → 2Fe(III) + H₂O

2Cu(I) + ½ O₂ + 2H⁺ → 2Cu(II) + H₂O

In this single stage there is an addition of external heat that is incorporated into the pile by means of the previously heated irrigation solutions.

The settlement stage with low leaching rate irrigation means that once the target heap temperature is reached in the previous stage, a new settlement stage is initiated where leaching is carried out interspersed with extended settlement periods. The settlement strategies can be 10, 15, 20 or 25 days. Between the settlement periods, irrigation is carried out for periods of 2 to 5 days to collect the copper that has been dissolved in the settlement stages.

The irrigation solution, raffinate, is brought to room temperature at about 20° C and does not require heating.

The settlement stage with pulse irrigation can be extended between 60 and 150 days.

The total leaching rate for this stage (considering all pulse irrigation) varies between 0.25 and 0.45 m³ of leaching solution per ton of ore. The objective of irrigating at a low leaching rate is justified to avoid heat loss by convection of the effluent solution. Under these conditions (adiabatic isolation, settlement, pulse irrigation), the temperature of the heap, although it decreases with respect to the previous stage, manages to remain at levels between 30°C and 40°C.

The main chemical reactions would be very similar to the above, ie:

CuFeS₂ + 4 Fe(III) → Cu(II) + 5 Fe(II) + 2 S

CuFeS₂ + 4 Cu(II) → Cu(I) + 5 Fe(II) + 2 S

Irrigation with raffinate and the same acid and chloride conditions as in the thermal activation stage are maintained. The incorporation of air is maintained in order to keep the system semi-adiabatic and to incorporate oxygen to ensure the oxidation reaction of the ferrous and cuprous ions. In this stage there is NO addition of external heat.

The chemical leaching stage is justified by the fact that, although most of the copper is transferred to the PLS solution, the high settlement levels can generate sulfuric acid deficits that do not allow the total solubilization of the reacted copper.

It has been observed that a portion of the copper re-precipitates on the ore in the form of copper oxysulfates and/or copper oxychlorides according to the following simplified reactions (for other sulfide species they are analogous):

2 CuFeS₂ + 4 O₂ + 4 H₂O → CuSO₄ Cu(OH)₂ + 2 Fe(OH)₃ + 3 S

8 CuFeS₂ + 13 O₂ + 18 H₂O + 4 NaCl → 4 CuCl(OH)₃ + 8 Fe(OH)₃ + 14 S + 2 Na₂SO₄

Once the settlement process with pulse irrigation is ended, a leaching process is carried out with sulfuric acid concentration ranges between 10 and 25 g/L. The final pH of the solution should be between 1.8 and 2.0.

This acid leaching can be performed in the primary heap itself or depending on the cycles in a tailings disposal dump conditioned for secondary leaching. The acid leaching time comprises a period between 30 and 90 days.

In this stage there is NO addition of external heat, and it is carried out at room temperature.

### EXAMPLE

Ore: As an example for this application, an ore containing mostly primary copper sulfides with a total copper grade of 0.52% was used. The copper contained in the sample can approximate: 49% in the form of chalcopyrite; 48% in the form of bornite; 1% in the form of chalcocite and 2% as copper oxides. The ore was crushed to achieve a size distribution 80% under ¾ inch. Experimental leaching tests were conducted in tubular columns 10 m high and 27.4 cm internal diameter, with capacity for 945 kg of ore with bulk density 1.60 ton/m³.

Acidulated brine: The acidulated brine that was added to the ore was prepared by previously dissolving the salt and acid in an ILS solution, considering doses of 16 kg/t and 8 kg/t respectively, in which the volume of ILS was determined in such a way as to achieve an agglomeration humidity of 8% wet basis in the agglomerated ore. The acidulated brine is heated autogenously by mixing heat of concentrated sulfuric acid, salt and ILS solution.

Agglomeration: The ore was agglomerated using 65 L of hot acidulated brine (humidity 8% wet basis) and with concentrations of total copper 2 g/L, total iron 5 g/L, acid 132 g/L and chloride 148 g/L, the non-agglomerated ore presents a temperature of 20°C. After making this mixture, the temperature of the agglomerated ore was increased to 24°C measured after being loaded into the 10m column, an operation that was carried out immediately after agglomeration, to minimize temperature losses.

Rest: The agglomerated and loaded mineral was subjected to settlement for 30 days. During this period the column is covered with thermofilm on the top and the walls insulated by thermal blankets to achieve an adiabatic effect. During the settlement period, aeration was carried out at a rate of 1 Nm³/h/m² using enriched air at a ratio O₂:N₂ = 60%:40%.

Thermal activation leaching: After the settlement period, leaching was started considering irrigation with ILS solution at 40 °C for thermal activation of the column, with concentrations of total copper 1.3 g/L, total iron 3 g/L, acid 14 g/L and chloride 90 g/L, for a period of 30 days in a continuous irrigation regime. Aeration was carried out at a rate of 0.25 Nm³/h/m².

Resting irrigation leaching: Subsequently, leaching was initiated considering intermittent irrigation with ILS solution at 22 °C, with concentrations of total copper 1.3 g/L, total iron 3 g/L, acid 14 g/L and chloride 90 g/L, for a period of 45 days of intermittent regime of 10 days of rest followed by 5 days of continuous irrigation. Aeration was maintained at a rate of 0.25 Nm³/h/m².

Acid leaching: The column continued with acid leaching with raffinate at 20-22°C, with concentrations of total copper 0.3 g/L, total iron 3 g/L, acid 20 g/L, for a period of 45 days of intermittent regime of 10 days of rest followed by 5 days of continuous irrigation. Finally, there were 5 days of drainage to complete a total cycle of 155 days.

### Results:

The results obtained are presented in Figures 1 and 2.

These results show that, by establishing a temperature between 35°C and 45°C during the resting period and initial continuous irrigation of the ore in the heap, it is possible to maintain an average bed temperature above 35°C during most of the irrigation cycle, considering that as of day 60 an intermittent irrigation at 22°C begins, which gradually cools the heap. The final copper recovery achieved for 155 days of irrigation corresponds to 70.2%.

From the effect of a higher temperature during the period of resting and initial irrigation of the ore in the heap, it is possible to increase copper extraction by at least 10 percentage points with respect to the case in which irrigation is carried out at a temperature of 22 °C during the entire irrigation cycle.

## Claims

1. Heap leaching process of ores in chloride environments that uses chemical reactions and minimizes heat losses, where semi-autogenous heating - with low external heat input - of the leaching heaps is achieved, **CHARACTERIZED in that** it comprises the following stages:
a. agglomeration of the ore using acidulated brine, increasing the initial temperature of the ore;
b. allow the stacked ore to rest, wherein the heap is aerated and covered with thermofilm (plastic cover) to promote exothermic reactions and reduce heat losses;
c. thermally activate the ore at the end of the resting stage, where said activation includes irrigation with leaching solutions with temperatures between 40°C and 60 °C;
d. allow the ore to rest again with irrigation at a low leaching rate, where the leaching is carried out interspersed with extended periods of resting - no irrigation; and
e. a chemical leaching stage where a dissolution of re-precipitated copper compounds takes place, which includes an acid leaching stage to dissolve soluble compounds in acidic environments.

2. Heap leaching process of ores in chloride environments that uses the chemical reactions according to claim 1, **CHARACTERIZED in that** said acid-salt curing stage of the ore comprises incorporating said acidulated brine at a temperature between 30 to 60 °C over the ore on a conveyor belt or using agglomerating drums to mix the ore and the hot acid-brine.

3. Heap leaching process of ores in chloride environments that uses the chemical reactions according to claim 2, **CHARACTERIZED in that** said brine comprises a mixture of salt (NaCl, KCl, MgCl2 or any salt with high concentrations of chloride ion), sulfuric acid and process solutions (PLS, ILS, Raffinate), all streams at ambient temperature.

4. Heap leaching process of ores in chloride environments that uses the chemical reactions according to claim 3, **CHARACTERIZED in that** said acidulated brine is heated to temperatures in the range of 30°C to 60°C in an autogenous manner - by dilution heat - by mixing in agitated tanks of concentrated acid, salt and process solutions.

5. Heap leaching process of ores in chloride environments that uses the chemical reactions according to claim 1, **CHARACTERIZED in that** said resting stage comprises an increase of the temperature of the ore to values between 25° to 40° C at the end of said resting stage.

6. Heap leaching process of ores in chloride environments using the heat of chemical reactions according to claim 1, **CHARACTERIZED in that** said resting stage lasts from 20 to 60 days.

7. Heap leaching process of ores in chloride environments that uses the chemical reactions according to claim 1, **CHARACTERIZED in that** said resting stage comprises that the ore is covered with thermofilm and/or bischofite.

8. Heap leaching process of ores in chloride environments that uses the chemical reactions according to claim 1, **CHARACTERIZED in that** in the thermal activation stage, said irrigation is performed continuously for a period of 15 to 30 days or up to a leaching ratio between 0.25 to 0.35 m³/ton.

9. Heap leaching process of ores in chloride environments that uses the chemical reactions according to claim 1, **CHARACTERIZED in that** in the resting stage with low leaching ratio, said rest fluctuates within a range of 10, 15, 20 to 25 days of rest, each alternated by watering stages of 2 to 5 days.

10. Heap leaching process of ores in chloride environments that uses the chemical reactions according to claim 9, **CHARACTERIZED in that** said mixture comprises a mixing ratio of each of the reagents, in concentrations of chloride ion ranging from 250 to 350 g/L and sulfuric acid ranging from 150 to 250 g/L.

11. Heap leaching process of ores in chloride environments that uses the chemical reactions according to claim 1, **CHARACTERIZED in that** said salt-acid curing stage comprises a mixing of said acidulated brine with the ore to be leached to reach a moisture ranging from 6% to 8%.

12. Heap leaching process of ores in chloride environments that uses the chemical reactions according to claim 1, **CHARACTERIZED in that** in said stage b) of resting of the ore, aeration with air or air enriched in oxygen at temperatures between 40° and 70 °C is carried out.

13. Heap leaching process of ores in chloride environments that uses the chemical reactions according to claim 12, **CHARACTERIZED in that** said enriched air comprises values up to a ratio of O₂:N₂ = 90:10.

14. Heap leaching process of ores in chloride environments that uses the chemical reactions according to claim 1, **CHARACTERIZED in that** said thermal activation stage comprises a continuous irrigation with ILS solution which corresponds to intermediate leaching solution that collects the solution produced by the partial leaching of copper from the mineral in the leaching heaps during the leaching cycle, until reaching an average temperature of the heap with values higher than 40°C but lower than 50°C.

15. Heap leaching process of ores in chloride environments that uses the chemical reactions according to claim 14, **CHARACTERIZED in that** said continuous irrigation comprises a solution with a concentration of between 10 to 25 g/L of sulfuric acid and a chloride ion concentration between 50 to 90 g/L.

16. Heap leaching process of ores in chloride environments that uses the chemical reactions according to claim 1, **CHARACTERIZED in that** said stage d), i.e. the resting stage with irrigation in pulses (irrigation-no irrigation), extends between 60 and 150 days.

17. Heap leaching process of ores in chloride environments that uses the chemical reactions according to claim 16, **CHARACTERIZED in that** the total leaching ratio of the irrigation-no-irrigation stage varies between 0.25 and 0.45.

18. Heap leaching process of ores in chloride environments that uses the chemical reactions according to claim 16, **CHARACTERIZED in that** the irrigation is performed with a solution at room temperature.

19. Heap leaching process of ores in chloride environments that uses the chemical reactions according to claim 1, **CHARACTERIZED in that** said chemical leaching stage comprises sulfuric acid ranges from 10 to 25 g/L and a final solution pH should be between 1.8 and 2.0.

20. Heap leaching process of ores in chloride environments that uses the chemical reactions according to claim 19, **CHARACTERIZED in that** the irrigation is performed with a solution at room temperature.

21. Heap leaching process of ores in chloride environments that uses the chemical reactions according to claim 18, **CHARACTERIZED in that** said chemical leaching stage comprises leaching in the same primary heap.

22. Heap leaching process of ores in chloride environments that uses the chemical reactions according to claim 18, **CHARACTERIZED in that** said chemical leaching stage comprises leaching in a tailings disposal dump conditioned to perform secondary leaching.

23. Heap leaching process of ores in chloride environments that uses the chemical reactions according to claim 18, **CHARACTERIZED in that** said chemical leaching stage is performed over a period of 30 to 90 days.
